(19) Europäisches Patentamt / European Patent Office / Office européen des brevets

(11) **EP 4 738 965 A1**

(12) **EUROPEAN PATENT APPLICATION**
published in accordance with Art. 153(4) EPC

(43) Date of publication:
**06.05.2026 Bulletin 2026/19**

(21) Application number: **24830971.8**

(22) Date of filing: **28.06.2024**

(51) International Patent Classification (IPC):
***H04W 72/232*** *(2023.01)*

(52) Cooperative Patent Classification (CPC):
**H04L 5/00; H04W 72/0453; H04W 72/232**

(86) International application number:
**PCT/CN2024/102336**

(87) International publication number:
**WO 2025/002342 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310804685**

(71) Applicant: **Beijing Unisoc Communications
Technology
Co., Ltd
Beijing 100083 (CN)**

(72) Inventor: **ZHOU, Huan
Beijing 100083 (CN)**

(74) Representative: **Casalonga
Casalonga & Partners
Bayerstraße 71/73
80335 München (DE)**

(54) **COMMUNICATION METHOD AND RELATED APPARATUS**

(57)    The present application relates to the technical field of communications. Disclosed are a communication method and a related apparatus. The method comprises: a terminal device receiving downlink control information (DCI) from a network device, wherein the DCI can be used for simultaneously scheduling data transmission of N cells, N being an integer greater than 1; and the terminal device sending data according to the DCI. The method provided in the present application further enhances the design of DCI, facilitates an improvement in the data transmission efficiency, and has high applicability.

FIG. 3

## Description

The present application claims priority to CN Patent Application No. 2023108046854, filed with the China National Intellectual Property Administration on June 30, 2023, and entitled "COMMUNICATION METHOD AND RELATED APPARATUS", the entirety of which is incorporated herein by reference.

## FIELD OF TECHNOLOGY

The present application relates to communication technology, and particularly to a communication method and a related apparatus.

## BACKGROUND

At present, downlink control information (DCI) is mainly used to schedule data transmission of a cell, but this scheduling method is inefficient and has limited applicability.

## SUMMARY OF THE INVENTION

Embodiments of the present application provide a communication method and a related apparatus, which further provides enhancements to the design of DCI, which contributes to improving data transmission efficiency, and has high applicability.

In a first aspect, embodiments of the present application provide a communication method, which can be applied to a terminal device. The terminal device may be the terminal device itself or a chip in the terminal device. The method comprises:

  receiving downlink control information, DCI, from a network device, the DCI capable of being used to simultaneously schedule data transmission of N cells, N being an integer greater than 1; and
  sending data according to the DCI.

In the present application, DCI can be used to simultaneously schedule data transmission of two or more cells, which contributes to improving data transmission efficiency and has high applicability.

Alternatively, in combination with the first aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes $(X + Y)$ bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or
when the values of the X bits in the FDRA subfield corresponding to the first cell are all 0, it indicates that the first cell is not scheduled.

In this implementation, it is specified how to indicate via DCI that one or more cells are not scheduled/unscheduled when a type-2 resource allocation type (i.e., an interlace resource allocation type) is used.

Alternatively, in combination with the first aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes $(X + Y)$ bits, wherein the X bits are used for indicating allocated interlaced resources, and the Y bits are determined based on a number of resource block, RB, sets included in an activated uplink bandwidth part, BWP, wherein the N cells include a first cell.

When the values of the $(X + Y)$ bits in the FDRA subfield corresponding to the first cell are all 1, it indicates that the first cell is not scheduled; or
when the values of the $(X + Y)$ bits in the FDRA subfield corresponding to the first cell are all 0, it indicates that the first cell is not scheduled.

In this implementation, it is specified how to indicate via DCI that one or more cells are not scheduled/unscheduled when a type-2 resource allocation type (i.e., an interlace resource allocation type) is used.

Alternatively, in combination with the first aspect, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

In this implementation, it is specified how to indicate a location of a resource in time domain for retransmitting HARQ-ACK information when FDRA is used to indicate which cells are scheduled.

Alternatively, in combination with the first aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;
wherein the first PDSCH is the PDSCH having the earliest starting location among the T PDSCHs, and $N_{pdsch}$ is related to $\mu_{PDCCH}$.

In this implementation, a relationship between an end location in time domain of the PDCCH and a starting location in time domain of the first scheduled PDSCH is defined when the subcarrier spacing corresponding to the PDCCH is different from the subcarrier spacings corresponding to the plurality of PDSCHs (here, the subcarrier spacings corresponding to the plurality of PDSCHs are the same).

Alternatively, in combination with the first aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;
wherein the first PDSCH is the PDSCH having the earliest starting location among the T PDSCHs, and $N_{pdsch}$ is related to $\mu_{PDCCH}$.

In this implementation, a relationship between an end location in time domain of the PDCCH and a starting location in time domain of the first scheduled PDSCH is defined when the subcarrier spacing corresponding to the PDCCH is different from the maximum subcarrier spacing or the minimum subcarrier spacing out of the subcarrier spacings corresponding to the plurality of PDSCHs.

In a second aspect, embodiments of the present application provide a communication method, which can be applied to a network device. The network device may be the network device itself or a chip in the network device. The method comprises:

determining downlink control information, DCI, the DCI capable of being used to simultaneously schedule data transmission of N cells, N being an integer greater than 1; and
sending the DCI to a terminal device.

Alternatively, in combination with the second aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or
when the values of the X bits in the FDRA subfield corresponding to the first cell are all 0, it indicates that the first cell is not scheduled.

Alternatively, in combination with the second aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or
when the values of the (X + Y) bits in the FDRA subfield corresponding to the first cell are all 0, it indicates that the first cell is not scheduled.

Alternatively, in combination with the second aspect, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, in combination with the second aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

Alternatively, in combination with the second aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

In a third aspect, embodiments of the present application provide a communication apparatus, which may be a terminal device itself or a chip in the terminal device. The apparatus comprises:

a transceiver unit configured to receive downlink control information, DCI, from a network device, the DCI capable of being used to simultaneously schedule data transmission of N cells, N being an integer greater than 1;

the transceiver unit is further configured to send data according to the DCI.

Alternatively, in combination with the third aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or

when the values of the X bits in the FDRA subfield corresponding to the first cell are all 0, it indicates that the first cell is not scheduled.

Alternatively, in combination with the third aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or

when the values of the (X + Y) bits in the FDRA subfield corresponding to the first cell are all 0, it indicates that the first cell is not scheduled.

Alternatively, in combination with the third aspect, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, in combination with the third aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

Alternatively, in combination with the third aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

In a fourth aspect, embodiments of the present application provide a communication apparatus, which may be a network device itself or a chip in the network device. The apparatus comprises:

a processing unit configured to determine downlink control information, DCI, the DCI capable of being used to simultaneously schedule data transmission of N cells, N being an integer greater than 1; and
a transceiver unit configured to send the DCI to a terminal device.

Alternatively, in combination with the fourth aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or

when the values of the X bits in the FDRA subfield corresponding to the first cell are all 0, it indicates that the first cell is not scheduled.

Alternatively, in combination with the fourth aspect, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or

when the values of the (X + Y) bits in the FDRA subfield corresponding to the first cell are all 0, it indicates that the first cell is not scheduled.

Alternatively, in combination with the fourth aspect, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, in combination with the fourth aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

Alternatively, in combination with the fourth aspect, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;

wherein the first PDSCH is the PDSCH having the earliest starting location among the T PDSCHs, and $N_{pdsch}$ is related to $\mu_{PDCCH}$.

In a fifth aspect, a chip is provided, including a processor and a communication interface. The processor is configured to cause the chip to perform the method according to any one of the first aspect above or to perform the method according to any one of the second aspect above.

In a sixth aspect, a chip module is provided, including a communication interface, a power module, a storage module, and a chip, wherein the power module is configured to provide power to the chip module, wherein the storage module is configured to store data and instructions, wherein the communication interface is configured for internal communication of the chip module or for communication between the chip module and external devices, and wherein the chip is configured to perform the method according to any one of the first aspect above, or to perform the method according to any one of the second aspect above.

In a seventh aspect, a communication apparatus is provided, including a memory and a processor, wherein the memory stores a computer program comprising program instructions, and the processor is configured to invoke the program instructions to cause the communication apparatus to perform the method according to any one of the first aspect above or to perform the method according to any one of the second aspect above.

In an eighth aspect, a computer-readable storage medium is provided, having computer-readable instructions stored therein, wherein the computer-readable instructions, when being executed on a computer, cause the computer to perform the method according to any one of the first aspect above or to perform the method according to any one of the second aspect above.

In a ninth aspect, the present application provides a computer program or a computer program product, including code or instructions, wherein the code or instructions, when being executed on a computer, cause the computer to perform the method according to any one of the first aspect above or to perform the method according to any one of the second aspect above.

In a tenth aspect, the present application further provides a communication system including the communication apparatus according to the third aspect above and the communication apparatus according to the fourth aspect above.

## BRIEF DESCRIPTION OF THE DRAWINGS

FIG. 1 is a schematic architecture diagram of a communication system provided by an embodiment of the present application;

FIG. 2 is a schematic diagram of an interlace provided by an embodiment of the present application;

FIG. 3 is a schematic flow diagram of a communication method provided by an embodiment of the present application;

FIG. 4a is a schematic diagram of a scenario for locations in time domain of a PDCCH and a first PDSCH provided by an embodiment of the present application;

FIG. 4b is another schematic diagram of a scenario for locations in time domain of a PDCCH and a first PDSCH provided by an embodiment of the present application;

FIG. 5a is yet another schematic diagram of a scenario for locations in time domain of a PDCCH and a first PDSCH provided by an embodiment of the present application;

FIG. 5b is yet another schematic diagram of a scenario for locations in time domain of a PDCCH and a first PDSCH provided by an embodiment of the present application;

FIG. 5c is yet another schematic diagram of a scenario for locations in time domain of a PDCCH and a first PDSCH provided by an embodiment of the present application;

FIG. 5d is yet another schematic diagram of a scenario for locations in time domain of a PDCCH and a first PDSCH provided by an embodiment of the present application;

FIG. 6 is a schematic structural diagram of another communication apparatus provided by an embodiment of the present application;

FIG. 7 is a schematic structural diagram of another communication apparatus provided by an embodiment of the present application; and

FIG. 8 is a schematic structural diagram of a module device provided by an embodiment of the present application.

## DETAILED DESCRIPTION OF EMBODIMENTS

The technical solutions in the embodiments of the present application will be described clearly and completely below in connection with the drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

The terms in the following embodiments of the present application are for the purpose of describing specific embodiments only and are not intended to limit the present application. As used in the specification and appended claims of the present application, the singular forms "a", "an", "the", "said", "that", and "this" are intended to include the plural forms as well, unless it is explicitly indicated otherwise. It should also be understood that the term "and/or" used in the present application is a description of relations of related objects, indicating three types of relations. For example, "A and/or B" may indicate: A alone, B alone, and both A and B, where A and B may be singular or plural. The character "/" indicates an "or" relation between the two objects before and after the character.

It should be noted that the terms "first", "second", "third", etc. in the specification and claims and the above drawings of the present application are used to distinguish similar objects and do not indicate a specific sequence or order. It should be understood that the data described in such a manner may be interchanged under appropriate circumstances so that the embodiments of the present application described herein may be implemented in sequences other than those illustrated or described herein. Furthermore, the terms "comprise/include" and any variations thereof are intended to cover non-exclusive inclusion. For example, processes, methods, systems, products, or servers that comprise/include a series of steps or units are not limited to those clearly listed steps or units, but may include other steps or units not clearly listed or inherent to these processes, methods, products, or devices. Furthermore, "at least one of" refers to one or more, and "a plurality of' refers to two or more.

For a better understanding of the embodiments of the present application, the system architecture involved in the embodiments of the present application is first introduced.

The technical solutions of the embodiments of the present application can be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD), a Universal Mobile Telecommunication System (UMTS), a Worldwide Interoperability for Microwave Access (WiMAX) communication system, a fifth generation (5G) system or a New Radio (NR), and future communication systems.

Alternatively, the technical solutions of the present application are also applicable to different network architectures, including but not limited to a relay network architecture, a dual-link architecture, a Vehicle-to-Everything architecture, etc.

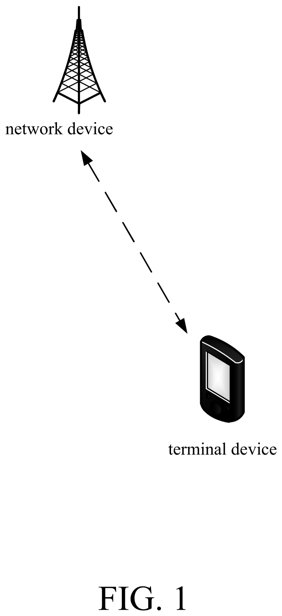

Referring to FIG.1, FIG. 1 is a schematic diagram of a communication system provided by an embodiment of the present application. The solutions in the present application may be applied to the communication system. The communication system may include at least one network device and at least one terminal device. FIG. 1 illustrates a communication system including one network device and one terminal device as an example. Wherein:

It should be noted that the terminal device involved in the embodiments of the present application may be a terminal device that supports simultaneous transmission of a plurality of antenna panels. Among them, the embodiments of the present application are mainly described schematically in an example where a terminal device supports simultaneous transmission of two antenna panels. Specifically, a terminal device includes a device that provides voice and/or data connectivity to a user. For example, a terminal device is a device with wireless transceiver functionality. It may be deployed on land, including indoor or outdoor, handheld, wearable, or vehicle-mounted, or it may also be deployed on water (such as ships, etc.), or it may also be deployed in air (e.g., on airplanes, balloons, and satellites, etc.). The terminal device may be a mobile phone, a pad, a computer with wireless transceiver functionality, a Virtual Reality (VR) terminal device, an Augmented Reality (AR) terminal device, a wireless terminal in industrial control, a vehicle-mounted terminal device, a wireless terminal in self-driving, a wireless terminal in remote medical, a wireless terminal in a smart grid, a wireless terminal in transportation safety, a wireless terminal in a smart city, a wireless terminal in a smart home, a wearable terminal device, etc. The embodiments of the present application do not pose limitation on the applicable scenarios. Sometimes, a terminal device may be referred to as a terminal, a User Equipment (UE), an access terminal device, a vehicle-mounted terminal, an industrial control terminal, a UE unit, a UE station, a mobile station, a mobile platform, a remote station, a remote terminal device, a mobile device, a UE terminal device, a wireless communication device, a UE agent, or a UE apparatus, etc. The terminal device may be fixed or mobile. In the embodiments of the present application, the apparatus for implementing the functions of the terminal device may be the terminal device itself, or may be an apparatus that may support the terminal device to implement the functions, such as a chip system or a combination of devices and components that may implement the functions of the terminal device. The apparatus may be installed in the terminal device.

A network device may be a base station, an evolved NodeB (eNodeB), a Transmission Reception Point (TRP), a next generation NodeB (gNB) in a fifth generation (5G) mobile communication system, a next generation base station in a sixth generation (6G) mobile communication system, a base station in a future mobile communication system, or an access node in a WiFi system, etc. The network device may also be a module or unit that implements part of the functions of a base station. For example, it may be a Central Unit (CU), or it may be a Distributed Unit (DU).Here, the CU implements the functions of the Radio Resource Control (RRC) protocol and the Packet Data Convergence Protocol (PDCP) of the base station, and may also implement the functions of the Service Data Adaptation Protocol (SDAP). The DU implements the functions of the Radio Link Control (RLC) layer and the Medium Access Control (MAC) layer of the base station, and may also implement part or all of the functions of the physical layer. Detailed description of the above protocol layers may be recited with reference to the related technical specifications of the 3rd Generation Partnership Project (3GPP). The network device may be a macro base station, a micro base station, or an indoor base station, or it may be a relay node or a donor node, etc. In the embodiments of the present application, the apparatus for implementing the functions of the network device may be the network device itself, or may be an apparatus that may support the network device to implement the functions, such as a chip system or a combination of devices and components that may implement the functions of the base station. This apparatus may be installed in the network device. The embodiments of the present application do not pose limitation on the specific forms of technology and apparatus adopted by the network device.

Firstly, some terms involved in the embodiments of this application are illustrated to facilitate understanding by those skilled in the art.

1. Subcarrier Spacing (SCS)

In New Radio (NR), a plurality of SCS are defined. The SCS corresponding to the SCS sequence number $\mu$ is $2^{\mu} \cdot 15$ kHz. For example, SCS with sequence numbers 0 to 4 correspond to 15kHz, 30kHz, 60kHz, 120kHz and 240kHz respectively.

2. Resource Block (RB)

In NR, one RB is defined as 12 consecutive subcarriers in the frequency domain.

3. Interlace, also referred to as interlaced resource subset

In an unlicensed spectrum of the 3rd generation partnership project (3GPP), the physical uplink shared channel (PUSCH)/physical uplink control channel (PUCCH) transmission can adopt an approach of interlace, wherein each interlace is a basic unit of resource allocation, and an interlace of 20 MHz/10 MHz contains 10 or 11 RBs, which are uniformly distributed in the frequency domain. For example, interlace 0 consists of RBs with RB indices 0, 10, 20, ..., 90.Among them, RB0 to RB9 constitute an interlaced resource group (cluster) 0, and RB10 to RB19 constitute an interlaced resource group (cluster) 1, and so on. Each interlaced resource group contains 10 RBs, which belong to different interlaces.

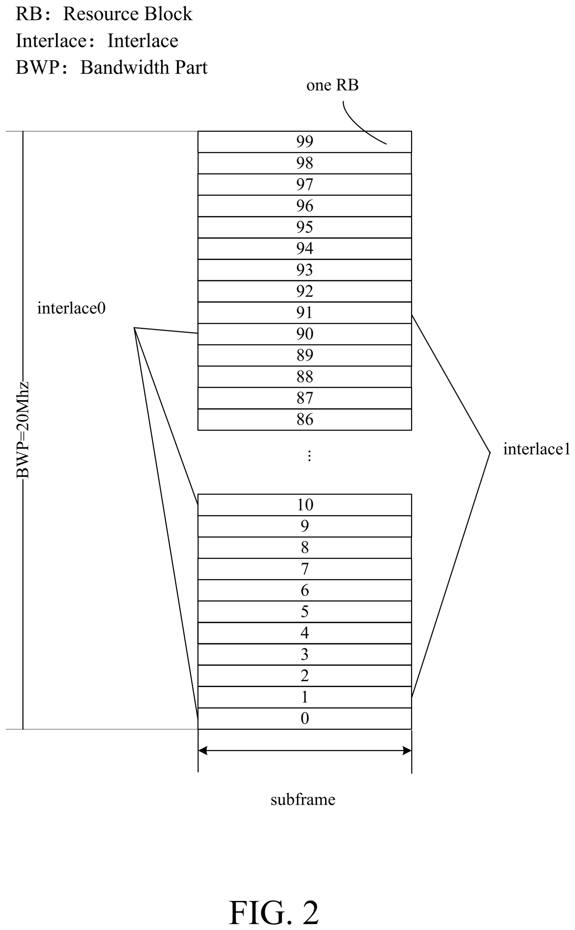

For example, referring to FIG. 2, FIG. 2 is a schematic diagram of interlace provided by an embodiment of the present application.As shown in FIG. 2, an example is illustrated with a bandwidth of a bandwidth part (BWP) as 20MHz, including a total of 100 RBs.It is assumed that 10 RBs are configured in each interlace and are uniformly distributed in the frequency domain.For example, interlace 0 consists of RBs with RB indices 0, 10, 20, ..., 90, i.e., interlace 0 = {RB0, RB10, RB20, RB30, RB40, RB50, RB60, RB70, RB80, RB90}. For another example, interlace 1 consists of RBs with RB indices 1, 11, 21, ..., 91, i.e., interlace 1 = {RB1, RB11, RB21, RB31, RB41, RB51, RB61, RB71, RB81, RB91}, and so on, interlace 9 consists of RBs with RB indices 9, 19, 29,..., 99, i.e., interlace 9 = {RB9, RB19, RB29, RB39, RB49, RB59, RB69, RB79, RB89, RB99}.

At present, downlink control information (DCI) is mainly used to schedule data transmission of a cell, but this scheduling method is inefficient and has limited applicability. Based on this, the present application provides a scheme of DCI scheduling data transmission of multiple cells, and enhancements designed for DCI under the scheme, which contributes to improving data transmission efficiency and has high applicability.

Provided below is a detailed description of the communication method, apparatus, chip, and chip module provided by the embodiments of the present application.

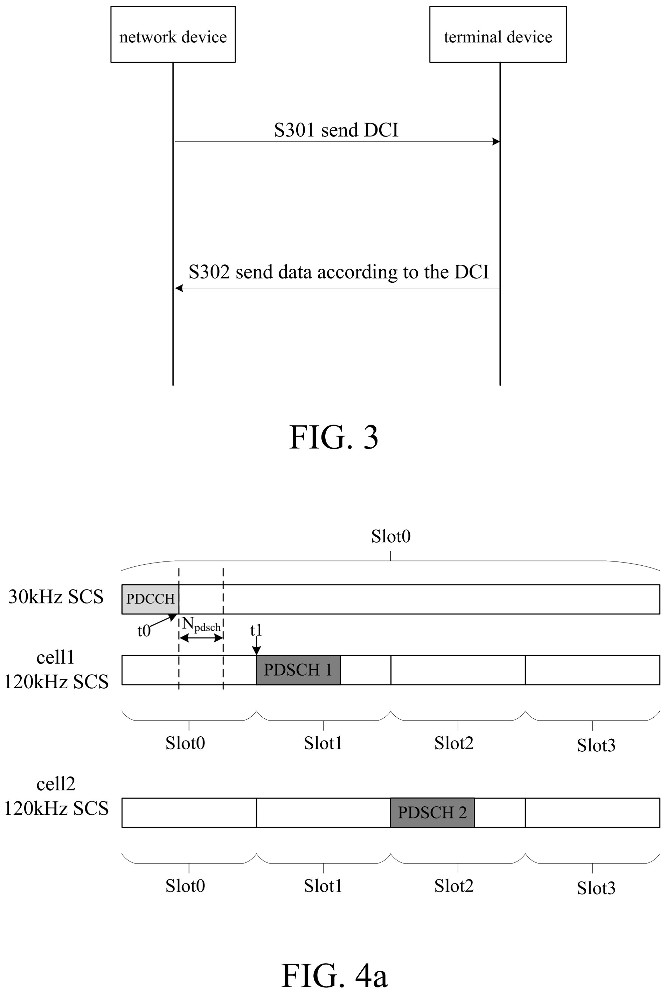

Referring to FIG. 3, FIG. 3 is a schematic flow diagram of a communication method provided by an embodiment of the present application. The method shown in FIG. 3 may be performed by a terminal device and a network device, wherein the terminal device or the network device may be the terminal device itself or the network device itself, or may be a chip in the terminal device or a chip in the network device. For convenience of description, the method provided in the present application will be exemplarily described below as being performed by a terminal device or a network device as an example. As shown in FIG. 3, it includes the following steps S301 to S302.

S301, The network device sends DCI to the terminal device. Accordingly, the terminal device receives the DCI from the network device.

In some possible implementations, the network device may determine the DCI and send the determined DCI to the terminal device. It can be understood that the DCI may be carried on a physical downlink control channel (PDCCH), or it can be described that the information carried/transmitted by the PDCCH is DCI.

It should be noted that the DCI in the present application can be used to simultaneously schedule data transmission of N cells, N being an integer greater than 1. That is, the DCI can be used to simultaneously schedule data transmission of two or more cells, or it can be described that the DCI can be used to simultaneously schedule data transmission of a plurality of cells, or it can be described that the DCI can be used to simultaneously schedule data transmission of two or more carriers. Based on this, the present application also provides enhancements to the design of DCI, and different enhancements are described respectively below.

Enhancement 1:

At present, FDRA method may be used to indicate which cell or cells are scheduled. Specifically, the FDRA method means an FDRA field in DCI is used to indicate which cell or cells are scheduled. Here, the FDRA field includes a plurality of FDRA subfields (or referred to as FDRA blocks). The plurality of FDRA subfields sequentially correspond to each cell in a set of cells that can be scheduled. Here, when an FDRA subfield corresponding to a certain cell is set to a special value, it indicates that the cell is not scheduled. For example, when resource allocation type 0 is in use, if an FDRA subfield corresponding to a certain cell is set to all 0, it means that the cell is not scheduled. For another example, when resource allocation type 1 is in use, if an FDRA subfield corresponding to a certain cell is set to all 1, it means that the cell is not scheduled. For another example, when dynamically switched resource allocation type is in use, that is, either resource allocation type 0 or resource allocation type 1 can be used, if an FDRA subfield corresponding to a certain cell is set to all 1 or all 0, it means that the cell is not scheduled. As can be understood, resource allocation type 2 is a resource allocation type of interlace. Currently there is no relevant specification on how to indicate that a cell is not scheduled when resource allocation type 2 is in use. Based on this, the present application provides enhancement 1, which provides a solution of how to indicate via DCI that one or more cells are not scheduled (unscheduled) for resource allocation type 2.

Specifically, the DCI includes an FDRA field, and the FDRA field includes N FDRA subfields, wherein one FDRA subfield is used to indicate a resource in frequency domain corresponding to one cell. When Resource Allocation Type 2 is in use, one FDRA subfield comprises (X + Y) bits (or is described as consisting of (X + Y) bits, typically, the X bits precede the Y bits), wherein the X bits are used for indicating allocated interlace, and the Y bits are determined based on a number of resource block, RB, sets included in an activated uplink bandwidth part, BWP. As can be understood, when resource allocation type 2 is in use, the lengths of the FDRA subfields corresponding to different cells may be different. Here, the N cells above include a first cell. For ease of description, the first cell is used as an example below to explain how to indicate that the first cell is not scheduled for resource allocation type 2. Wherein:

In one implementation, when the values of the X bits in the FDRA subfield corresponding to the first cell are all 1, it indicates that the first cell is not scheduled. Here, the values of the X bits are all 1, that is, the value of each bit among the X bits is 1.

In another implementation, when the values of the X bits in the FDRA subfield corresponding to the first cell are all 0, it indicates that the first cell is not scheduled. Here, the values of the X bits are all 0, that is, the value of each bit among the X bits is 0.

In yet another implementation, when the values of the (X+Y) bits in the FDRA subfield corresponding to the first cell are all 1, it indicates that the first cell is not scheduled. Here, the values of the (X+Y) bits are all 1, that is, the value of each bit among the (X+Y) bits is 1.

In yet another implementation, when the values of the (X+Y) bits in the FDRA subfield corresponding to the first cell are all 0, it indicates that the first cell is not scheduled. Here, the values of the (X+Y) bits are all 0, that is, the value of each bit among the (X+Y) bits is 0.

It can be understood that the following two cases exist for the size of X in the present application:
Case 1: when the subcarrier spacing of the PDCCH is 15kHz, X = 6. That is, (6 + Y) bits can be used to indicate resource allocation in frequency domain. The 6 bits can correspond to 63 possibilities of resource allocation of interlace. Specifically, the first 55 possibilities correspond to the joint coding of the starting location and length of 10 interlaces respectively, and the last 8 possibilities can be referenced to Protocol 38.214, which will not be repeated here. Y bits may be determined by a number of RB sets included in a currently activated uplink BWP. For example:

$$\mathrm{Y}=\left\lceil \log_2\left(\frac{N_{\mathrm{RB-set,UL}}^{\mathrm{BWP}}\left(N_{\mathrm{RB-set,UL}}^{\mathrm{BWP}}+1\right)}{2}\right)\right\rceil,$$

Wherein $N_{\mathrm{RB-set,UL}}^{\mathrm{BWP}}$ represents a number of RB sets included in an activated uplink BWP.

Based on case 1, in one implementation, when the values of the 6 bits in the FDRA subfield corresponding to the first cell are all 1, it indicates that the first cell is not scheduled.

In another implementation, when the values of the 6 bits in the FDRA subfield corresponding to the first cell are all 0, it indicates that the first cell is not scheduled.

In yet another implementation, when the values of the (6+Y) bits in the FDRA subfield corresponding to the first cell are all 1, it indicates that the first cell is not scheduled; or

In yet another implementation, when the values of the (6+Y) bits in the FDRA subfield corresponding to the first cell are all 0, it indicates that the first cell is not scheduled.

Case 2: when the subcarrier spacing of the PDCCH is 30KHz, X = 5. That is, (5 + Y) bits can be used to indicate resource allocation in frequency domain, wherein each bit of the 5 bits corresponds to 5 interlaces, respectively, that is, the interlace is indicated by a bitmap. Similarly, Y bits may be determined by a number of RB sets included in a currently activated uplink BWP. For example:

$$Y = \left\lceil \log_2 \left( \frac{N_{RB-set,UL}^{BWP}(N_{RB-set,UL}^{BWP}+1)}{2} \right) \right\rceil,$$

Wherein $N_{RB-set,UL}^{BWP}$ represents a number of RB sets included in an activated uplink BWP.

Based on case 2, in one implementation, when the values of the 5 bits in the FDRA subfield corresponding to the first cell are all 1, it indicates that the first cell is not scheduled.

In another implementation, when the values of the 5 bits in the FDRA subfield corresponding to the first cell are all 0, it indicates that the first cell is not scheduled.

In yet another implementation, when the values of the (5+Y) bits in the FDRA subfield corresponding to the first cell are all 1, it indicates that the first cell is not scheduled; or

In yet another implementation, when the values of the (5+Y) bits in the FDRA subfield corresponding to the first cell are all 0, it indicates that the first cell is not scheduled.

Enhancement 2:

The hybrid automatic repeat request (HARQ) mechanism is used in new radio (NR) system to improve the efficiency of data transmission. In the medium access control (MAC) layer, each cell has a HARQ entity, and the uplink and downlink are independent. Each HARQ entity contains multiple parallel HARQ processes. The terminal device instructs the physical layer to send acknowledgement (ACK) or negative acknowledgement (NACK) information according to the decoding result. The ACK and NACK information are collectively referred to as HARQ-ACK information.

A channel carrying HARQ-ACK information may be cancelled for some reasons, such as when a slot in which a PUCCH for feeding back HARQ-ACK information of a semi-persistent scheduling (SPS) physical downlink shared channel (PDSCH) is located is configured as a downlink slot, or when at least one symbol of a PUCCH resource for feeding back HARQ-ACK information of an SPS PDSCH is configured as a downlink symbol or a flexible symbol, the PUCCH would be cancelled. Accordingly, when the network device cannot obtain the HARQ-ACK information, the network device can only perform scheduling of retransmission of the corresponding PDSCH. When the terminal device has actually obtained the PDSCH correctly, the system efficiency is low, and the latency performance of service is affected. When PDSCH is configured in a quite short period, HARQ-ACK information feedback is very frequent, and the problem of canceling the HARQ-ACK information feedback is particularly serious. In order to solve the problem that the system efficiency is affected due to the HARQ-ACK feedback corresponding to the PDSCH being cancelled, the network device may instruct HARQ-ACK information retransmission (i.e., HARQ-ACK retransmission). For example, a HARQ-ACK retransmission indicator field in the DCI indicates whether to perform HARQ-ACK retransmission. When the HARQ-ACK retransmission is indicated, a modulation and coding scheme (MCS) field of a first codeword of the DCI may be applied to indicate a location of the HARQ-ACK retransmission in time domain.

It should be noted that in the present application, one DCI can be used to simultaneously schedule data transmission of two or more cells, wherein when the FDRA is used to specifically indicate which cell or cells are scheduled, it is not discussed how to indicate a location of a resource used for retransmitting the HARQ-ACK information in time domain. Based on this, the present application provides enhancement 2, which provides a scheme of how to indicate a location of HARQ-ACK information retransmission in time domain when an FDRA is used to indicate which cell or cells are scheduled.

Specifically, the DCI includes an MCS field, and the MCS field includes N MCS subfields, wherein one MCS subfield is used to indicate a resource in time domain corresponding to a cell. M cells out of the N cells are not scheduled, wherein the M cells include a first cell, and wherein M is a positive integer less than or equal to N. For example, X bits in a FDRA subfield corresponding to a certain cell may indicate that the cell is not scheduled, or (X + Y) bits in a FDRA subfield corresponding to a certain cell may indicate that the cell is not scheduled, that is, enhancement 2 may be combined with enhancement 1.

In one possible implementation, when M is equal to 1 (i.e., when only one cell is not scheduled), the MCS subfield corresponding to the one unscheduled cell may be directly used to indicate a location of a resource in time domain for retransmission of HARQ-ACK information (or described as indicating a location in time domain for retransmission of HARQ-ACK information). When M is an integer greater than 1 (i.e., when two or more cells are not scheduled), the MCS subfield corresponding to the first cell may be used to indicate a location of a resource in time domain for retransmission of HARQ-ACK information (or described as indicating a location in time domain for HARQ-ACK information retransmission). Here, the first cell is a cell with the lowest cell index among the M cells, or the first cell is a cell with the highest cell index among the M cells. That is, when the FDRA method is used to indicate that M cells (where M is an integer greater than 1) are not scheduled (or described as when the FDRA method is used to specifically indicate that (N - M) cells are scheduled), the MCS subfield corresponding to the cell with the lowest cell index among the M unscheduled cells may be used to indicate a location in time domain of HARQ-ACK information retransmission, or the MCS subfield corresponding to the cell with the highest cell index among the M unscheduled cells may be used to indicate a location in time domain of HARQ-ACK information retransmission.

In another possible implementation, when M is an integer greater than 1 (i.e., when two or more cells are not scheduled), an algorithm may be employed to select the MCS subfield corresponding to one cell from the M unscheduled cells to indicate a location in time domain of HARQ-ACK information retransmission. For example, the cell indices corresponding to the M unscheduled cells are arranged in ascending or descending order. When M is an odd number, the MCS subfield corresponding to the $((M+1)/2)^{th}$ unscheduled cell (from left to right) is selected to indicate the location in time domain of HARQ-ACK information retransmission. When M is an even number, the MCS subfield corresponding to the $(M/2)^{th}$ unscheduled cell (from left to right) is selected to indicate the location in time domain of HARQ-ACK information retransmission, or the MCS subfield corresponding to the $(M/2+1)^{th}$ unscheduled cell is selected to indicate the location in time domain of HARQ-ACK information retransmission. For example, assuming M=7, the MCS subfield corresponding to the fourth unscheduled cell (from left to right) is selected to indicate a location in time domain of HARQ-ACK information retransmission. As another example, assuming M=6, the MCS subfield corresponding to the third unscheduled cell (from left to right) is selected to indicate a location in time domain of HARQ-ACK information retransmission, or the MCS subfield corresponding to the fourth unscheduled cell is selected to indicate a location in time domain of HARQ-ACK information retransmission.

In yet another possible implementation, when M is an integer greater than 1 (i.e., when two or more cells are not scheduled), an MCS subfield corresponding to a fixed cell may be specified to indicate a location in time domain of HARQ-ACK information retransmission. Alternatively, the fixed cell may be predefined in a protocol, or preconfigured, or configured by a network device, without limitation herein.

Enhancement 3:

Currently, NR requires support of cross-carrier scheduling between different SCSs. In the prior art, one DCI is mainly used to schedule data transmission of one cell. Therefore, when the subcarrier spacing corresponding to the PDCCH is smaller than the subcarrier spacing corresponding to the PDSCH, or when the subcarrier spacing corresponding to the PDCCH is larger than the subcarrier spacing corresponding to the PDSCH, a relationship between an end location in time domain of the PDCCH and a starting location in time domain of the PDSCH is merely specified. However, in case one DCI can be used to simultaneously schedule data transmission of two or more cells, there is no definition on a relationship between an end location in time domain of the PDCCH and a starting location in time domain of the PDSCH, when the subcarrier spacing corresponding to the PDCCH is different from the subcarrier spacings corresponding to the plurality of PDSCHs (here, the subcarrier spacings corresponding to the plurality of PDSCHs are the same), or when the subcarrier spacing corresponding to the PDCCH is different from the maximum subcarrier spacing or the minimum subcarrier spacing out of the subcarrier spacings corresponding to the plurality of PDSCHs. Based on this, the present application provides enhancement 3, which defines a relationship between an end location in time domain of the PDCCH and a starting location in time domain of the first scheduled PDSCH when the subcarrier spacing corresponding to the PDCCH is different from the subcarrier spacings corresponding to the plurality of PDSCHs (here, the subcarrier spacings corresponding to the plurality of PDSCHs are all the same), and defines a relationship between an end location in time domain of the PDCCH and a starting location in time domain of the first scheduled PDSCH when the subcarrier spacing corresponding to the PDCCH is different from the maximum subcarrier spacing or the minimum subcarrier spacing out of the subcarrier spacings corresponding to the plurality of PDSCHs.

Specifically, the DCI includes scheduling information of T downlink shared physical channels, PDSCHs, corresponding to W cells, wherein W is a positive integer less than or equal to N, and T is an integer greater than 0. Specifically, T may be an integer greater than W, or T may be an integer less than W, or T may be equal to W, without limitation herein.

In one implementation, the subcarrier spacing corresponding to the PDCCH may be expressed as $\mu_{PDCCH}$, and the subcarrier spacings corresponding to T PDSCHs are all the same, and may be expressed as $\mu_{PDSCH}$. Wherein:

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH.

When $\mu_{PDCCH} > \mu_{PDSCH}$, a first symbol of the first scheduled PDSCH is not earlier than an end symbol of $N_{pdsch}$ PDCCH symbols after an end symbol of the PDCCH.

It should be noted that in the present application, the first PDSCH is the PDSCH with the earliest starting location (or starting point, start time) among the T PDSCHs. In the present application, the size of $N_{pdsch}$ is related to the size of $\mu_{PDCCH}$. In the present application, "no earlier than" may also be described as "later than", or may be described as "greater than", or may be described as "greater than or equal to", without limitation herein. Here, $N_{pdsch}$ PDCCH symbols may be understood as $N_{pdsch}$ symbols determined based on the PDCCH subcarrier spacing.

As an example, referring to FIG. 4a, FIG. 4a is a schematic diagram of a scenario for locations in time domain of a PDCCH and a first PDSCH provided by an embodiment of the present application. As shown in FIG. 4a, the subcarrier spacing corresponding to the PDCCH is 30kHz, i.e., $\mu_{PDCCH}$=30kHz. The subcarrier spacings corresponding to the PDSCHs of cell 1 and cell 2 are the same and both are 120kHz, i.e., $\mu_{PDSCH}$=120kHz. Since $\mu_{PDCCH} < \mu_{DSCH}$, a first symbol (e.g. t1 in FIG. 4a) of the first scheduled PDSCH (e.g. PDSCH 1 in FIG. 4a) is not earlier than a first symbol in a slot next to the slot in which $N_{pdsch}$ PDCCH symbols are located after an end symbol (e.g. t0 in FIG. 4a) of the PDCCH. It should be noted that the first PDSCH is the PDSCH with the earliest starting location (or starting point, start time) among the T PDSCHs. For example, in the scenario shown in FIG. 4a, T = 2, and the start time of PDSCH 1 among the two PDSCHs is earlier than the start time of PDSCH 2, so that PDSCH 1 is the first PDSCH.

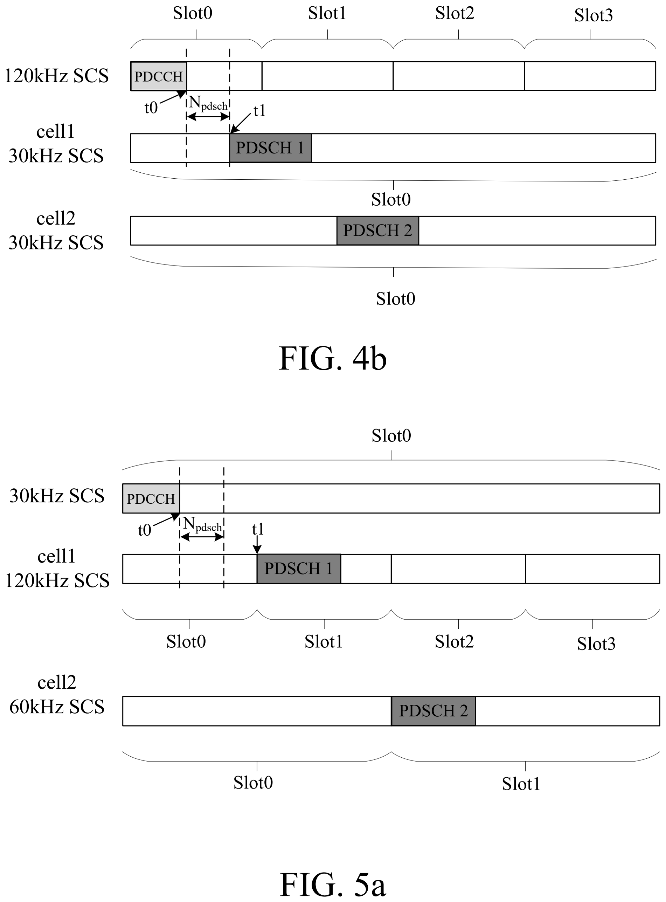

As an example, referring to FIG. 4b, FIG. 4b is another schematic diagram of a scenario for locations in time domain of a PDCCH and a first PDSCH provided by an embodiment of the present application. As shown in FIG. 4b, the subcarrier spacing corresponding to the PDCCH is 120kHz, i.e., $\mu_{PDCCH}$=120kHz. The subcarrier spacings corresponding to the PDSCHs of cell 1 and cell 2 are the same and both are 30kHz, i.e., $\mu_{PDSCH}$=30kHz. Since $\mu_{PDCCH} > \mu_{PDSCH}$, a first symbol (e.g. t1 in FIG. 4b) of the first scheduled PDSCH (e.g. PDSCH 1 in FIG. 4b) is not earlier than an end symbol of $N_{pdsch}$ PDCCH symbols after an end symbol (e.g. t0 in FIG. 4b) of the PDCCH. It should be noted that the first PDSCH is the PDSCH with the earliest starting location (or starting point, start time) among the T PDSCHs. For example, in the scenario shown in FIG. 4b, T = 2, and the start time of PDSCH 1 among the two PDSCHs is earlier than the start time of PDSCH 2, so that PDSCH 1 is the first PDSCH.

In another implementation, the subcarrier spacing corresponding to the PDCCH is $\mu_{PDCCH}$, and the subcarrier spacings corresponding to the T PDSCHs may be different from each other, or the subcarrier spacings corresponding to the T PDSCHs may not be exactly the same. Here, the maximum subcarrier spacing or the minimum subcarrier spacing among the subcarrier spacings corresponding to the T PDSCHs may be expressed as $\mu_{PDSCH}$. Wherein:

when $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;
when $\mu_{PDCCH} > \mu_{PDSCH}$, a first symbol of the first scheduled PDSCH is not earlier than an end symbol of $N_{pdsch}$ PDCCH symbols after an end symbol of the PDCCH;
wherein the first PDSCH is the PDSCH with the earliest starting location among the T PDSCHs, and the size of $N_{pdsch}$ is related to the size of $\mu_{PDCCH}$.

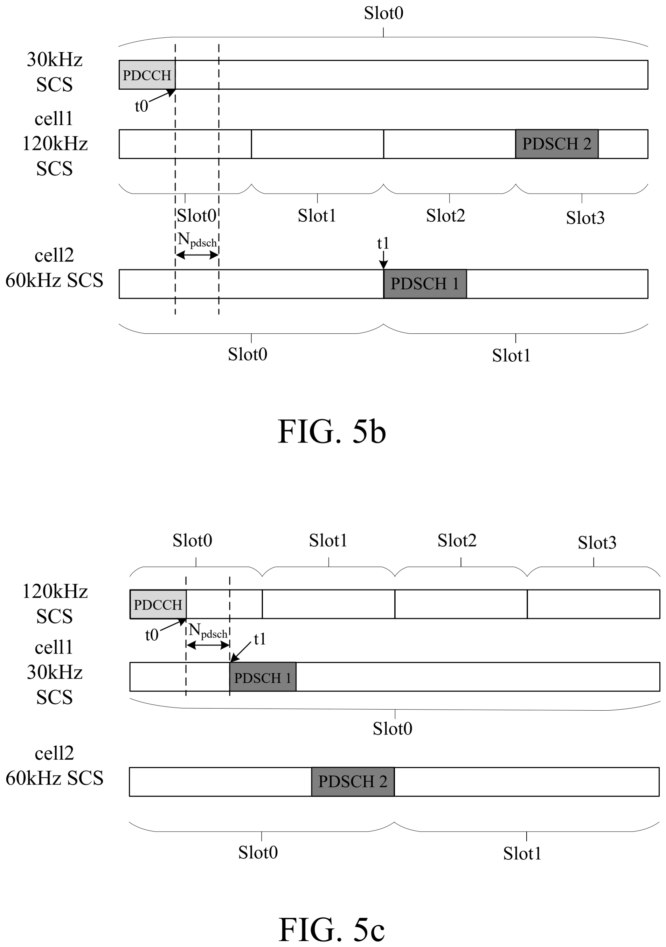

As an example, referring to FIG. 5a, FIG. 5a is another schematic diagram of a scenario for locations in time domain of a PDCCH and a first PDSCH provided by an embodiment of the present application. As shown in FIG. 5a, the subcarrier spacing corresponding to the PDCCH is 30 kHz, i.e., $\mu_{PDCCH}$=30 kHz, and the subcarrier spacings corresponding to the PDSCHs of cell 1 and cell 2 are different. The subcarrier spacing corresponding to the PDSCH of cell 1 is 120 kHz, and the subcarrier spacing corresponding to the PDSCH of cell 2 is 60 kHz. Taking the maximum subcarrier spacing out of the subcarrier spacings corresponding to the PDSCHs of cell 1 and cell 2 as $\mu_{PDSCH}$, i.e., $\mu_{PDSCH}$=120 kHz, since $\mu_{PDCCH} < \mu_{PDSCH}$, a first symbol (e.g. t1 in FIG. 5a) of the first scheduled PDSCH (e.g. PDSCH 1 in FIG. 5a) is not earlier than a first symbol in a slot next to the slot in which $N_{pdsch}$ PDCCH symbols are located after an end symbol (e.g. t0 in FIG. 5a) of the PDCCH. It should be noted that the first PDSCH is the PDSCH with the earliest starting location (or starting point, start time) among the T PDSCHs. For example, in the scenario shown in FIG. 5a, T = 2, and the start time of PDSCH 1 among the two PDSCHs is earlier than the start time of PDSCH 2, so that PDSCH 1 is the first PDSCH. Similar cases apply to FIGs. 5b to 5d, and will not be described later.

As a further example, referring to FIG. 5b, FIG. 5b is another schematic diagram of a scenario for locations in time domain of a PDCCH and a first PDSCH provided by an embodiment of the present application. As shown in FIG. 5b, the subcarrier spacing corresponding to the PDCCH is 30 kHz, i.e., $\mu_{PDCCH}$=30 kHz, and the subcarrier spacings corresponding to the PDSCHs of cell 1 and cell 2 are different. The subcarrier spacing corresponding to the PDSCH of cell 1 is 120 kHz, and the subcarrier spacing corresponding to the PDSCH of cell 2 is 60 kHz. Taking the minimum subcarrier spacing out of the subcarrier spacings corresponding to the PDSCHs of cell 1 and cell 2 as $\mu_{PDSCH}$, i.e., $\mu_{PDSCH}$=60 kHz, since $\mu_{PDCCH} < \mu_{PDSCH}$, a first symbol (e.g. t1 in FIG. 5b) of the first scheduled PDSCH (e.g. PDSCH 1 in FIG. 5b) is not earlier than a first symbol in a slot next to the slot in which $N_{pdsch}$ PDCCH symbols are located after an end symbol (e.g. t0 in FIG. 5b) of the PDCCH.

As a further example, referring to FIG. 5c, FIG. 5c is another schematic diagram of a scenario for locations in time domain of a PDCCH and a first PDSCH provided by an embodiment of the present application. As shown in FIG. 5c, the subcarrier spacing corresponding to the PDCCH is 120kHz, i.e., $\mu_{PDCCH}$=120 kHz, and the subcarrier spacings corresponding to the PDSCHs of cell 1 and cell 2 are different. The subcarrier spacing corresponding to the PDSCH of cell 1 is 30 kHz, and the subcarrier spacing corresponding to the PDSCH of cell 2 is 60 kHz. Taking the minimum subcarrier spacing out of the subcarrier spacings corresponding to the PDSCHs of cell 1 and cell 2 as $\mu_{PDSCH}$, i.e., $\mu_{PDSCH}$=30 kHz, since $\mu_{PDCCH} > \mu_{PDSCH}$, a first symbol (e.g. t1 in FIG. 5c) of the first scheduled PDSCH (e.g. PDSCH 1 in FIG. 5c) is not earlier than an end symbol of $N_{pdsch}$ PDCCH symbols after an end symbol (e.g. t0 in FIG. 5c) of the PDCCH.

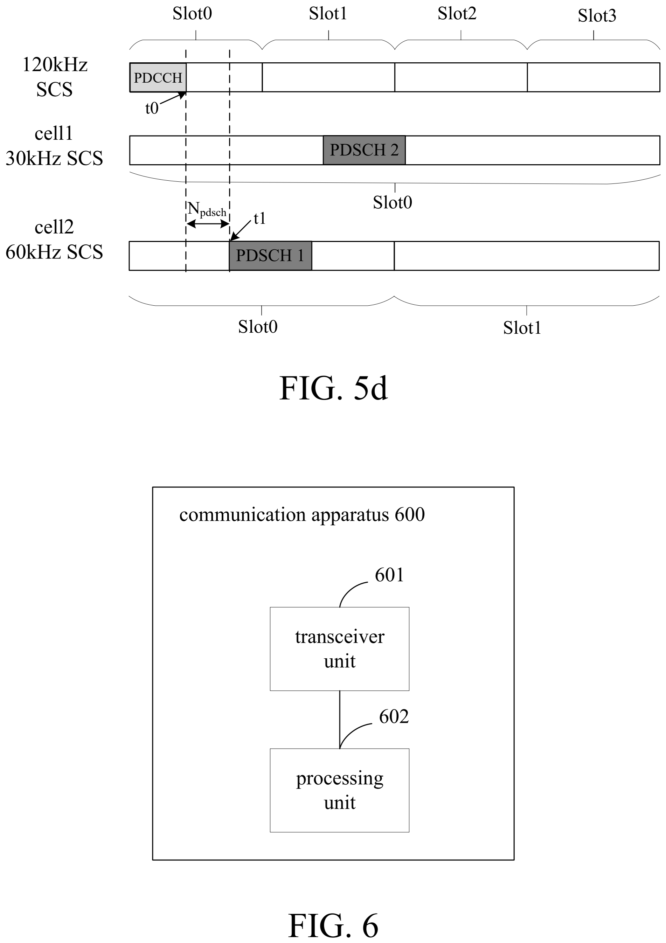

As a further example, referring to FIG. 5d, FIG. 5d is another schematic diagram of a scenario for locations in time domain of a PDCCH and a first PDSCH provided by an embodiment of the present application. As shown in FIG. 5d, the subcarrier spacing corresponding to the PDCCH is 120kHz, i.e., $\mu_{PDCCH}$=120 kHz, and the subcarrier spacings corresponding to the PDSCHs of cell 1 and cell 2 are different. The subcarrier spacing corresponding to the PDSCH of cell 1 is 30 kHz, and the subcarrier spacing corresponding to the PDSCH of cell 2 is 60 kHz. Taking the maximum subcarrier spacing out of the subcarrier spacings corresponding to the PDSCHs of cell 1 and cell 2 as $\mu_{PDSCH}$, i.e., $\mu_{PDSCH}$=60 kHz, since $\mu_{PDCCH} > \mu_{PDSCH}$, a first symbol (e.g. t1 in FIG. 5d) of the first scheduled PDSCH (e.g. PDSCH 1 in FIG. 5d) is not earlier than an end symbol of $N_{pdsch}$ PDCCH symbols after an end symbol (e.g. t0 in FIG. 5d) of the PDCCH.

It is to be understood that enhancement 1, enhancement 2, and enhancement 3 described above may be implemented independently , or different enhancements may be combined with each other. For example, enhancement 1 and enhancement 2 may be combined, without limitation herein.

S302, The terminal device sends data according to the DCI.

In some possible implementations, the terminal device may send data according to the DCI.

In the embodiments of the present application, the DCI can be used to simultaneously schedule data transmission of two or more cells. In addition, the embodiments of the present application further provide enhancements to the design of DCI, that is, provide enhancements 1 to 3, which contribute to improving data transmission efficiency and have high applicability.

Referring to FIG. 6, FIG. 6 is a schematic structural diagram of a communication apparatus provided by an embodiment of the present application. The communication apparatus may be a terminal device or an apparatus (such as a chip) having a function of a terminal device. Specifically, as shown in FIG. 6, the communication apparatus 600 may include a transceiver unit 601 and a processing unit 602, wherein:

In a first implementation, the communication apparatus is a terminal device.

The transceiver unit 601 is configured to receive downlink control information, DCI, from a network device, the DCI capable of being used to simultaneously schedule data transmission of N cells, N being an integer greater than 1.

The transceiver unit 601 is further configured to send data according to the DCI.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or

when the values of the X bits in the FDRA subfield corresponding to the first cell are all 0, it indicates that the first cell is not scheduled.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or

when the values of the (X + Y) bits in the FDRA subfield corresponding to the first cell are all 0, it indicates that the first cell is not scheduled.

Alternatively, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

In a second implementation, the communication apparatus is a network device.

The processing unit 602 is configured to determine downlink control information, DCI, the DCI capable of being used to simultaneously schedule data transmission of N cells, N being an integer greater than 1.

The transceiver unit 601 is configured to send the DCI to a terminal device.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or

when the values of the X bits in the FDRA subfield corresponding to the first cell are all 0, it indicates that the first cell is not scheduled.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or

when the values of the (X + Y) bits in the FDRA subfield corresponding to the first cell are all 0, it indicates that the first cell is not scheduled.

Alternatively, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

The embodiments of the present application also provide a chip, and the chip may perform the relevant steps of the terminal device or the network device in the method embodiments mentioned above. The chip includes a processor and a communication interface. The processor is configured to cause the chip to perform the following operations.

In a first implementation, the chip is used to perform the relevant steps of the terminal device in the method embodiments mentioned above. The processor is configured to cause the chip to:

receive downlink control information, DCI, from a network device, the DCI capable of being used to simultaneously schedule data transmission of N cells, N being an integer greater than 1; and send data according to the DCI.

In the present application, DCI can be used to simultaneously schedule data transmission of two or more cells, which contributes to improving data transmission efficiency and has high applicability.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or

when the values of the X bits in the FDRA subfield corresponding to the first cell are all 0, it indicates that the first cell is not scheduled.

In this implementation, it is specified how to indicate via DCI that one or more cells are not scheduled/unscheduled when a type-2 resource allocation type (i.e., an interlace resource allocation type) is used.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or

when the values of the (X + Y) bits in the FDRA subfield corresponding to the first cell are all 0, it indicates that the first cell is not scheduled.

In this implementation, it is specified how to indicate via DCI that one or more cells are not scheduled/unscheduled when a type-2 resource allocation type (i.e., an interlace resource allocation type) is used.

Alternatively, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

In this implementation, it is specified how to indicate a location of a resource in time domain for retransmitting HARQ-ACK information when FDRA method is used to indicate which cells are scheduled.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

In this implementation, a relationship between an end location in time domain of the PDCCH and a starting location in time domain of the first scheduled PDSCH is defined when the subcarrier spacing corresponding to the PDCCH is different from the subcarrier spacings corresponding to the plurality of PDSCHs (here, the subcarrier spacings corresponding to the plurality of PDSCHs are the same).

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;

wherein the first PDSCH is the PDSCH with the earliest starting location among the T PDSCHs, and $N_{pdsch}$ is related to $\mu_{PDCCH}$.

In this implementation, a relationship between an end location in time domain of the PDCCH and a starting location in time domain of the first scheduled PDSCH is defined when the subcarrier spacing corresponding to the PDCCH is different from the maximum subcarrier spacing or the minimum subcarrier spacing out of the subcarrier spacings corresponding to the plurality of PDSCHs.

In a second implementation, the chip is used to perform the relevant steps of the network device in the method embodiments mentioned above. The processor is configured to cause the chip to:

determine downlink control information, DCI, the DCI capable of being used to simultaneously schedule data transmission of N cells, N being an integer greater than 1; and
send the DCI to a terminal device.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the X bits in the FDRA subfield corresponding to the first cell are all 1, it indicates that the first cell is not scheduled; or
when the values of the X bits in the FDRA subfield corresponding to the first cell are all 0, it indicates that the first cell is not scheduled.

Alternatively, the DCI includes a frequency domain resource allocation, FDRA, field, and the FDRA field includes N FDRA subfields, wherein one FDRA subfield is used to indicate a resource in frequency domain corresponding to a cell, wherein the one FDRA subfield includes (X + Y) bits, wherein the X bits are used for indicating allocated interlaced resources, and the Y bits are determined based on a number of resource block, RB, sets included in an activated uplink bandwidth part, BWP, wherein the N cells include a first cell.

When the values of the (X + Y) bits in the FDRA subfield corresponding to the first cell are all 1, it indicates that the first cell is not scheduled; or
when the values of the (X + Y) bits in the FDRA subfield corresponding to the first cell are all 0, it indicates that the first cell is not scheduled.

Alternatively, the DCI includes a modulation coding scheme, MCS, field, and the MCS field includes N MCS subfields, wherein one MCS subfield is used to indicate a resource in time domain corresponding to a cell, wherein M cells out of the N cells are not scheduled, wherein the M cells include a first cell, and wherein M is a positive integer less than or equal to N.

When M is an integer greater than 1, the first cell is a cell with the lowest cell index among the M cells, or the first cell is a cell with the highest cell index among the M cells, wherein the MCS subfield corresponding to the first cell is used to indicate a location of a resource in time domain for retransmitting hybrid automatic retransmission request acknowledgement, HARQ-ACK, information.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$.

When $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{DSCH}$, a first symbol of the first scheduled PDSCH is not earlier than an end symbol of $N_{pdsch}$ PDCCH symbols after an end symbol of the PDCCH;
wherein the first PDSCH is the PDSCH with the earliest starting location among the T PDSCHs, and $N_{pdsch}$ is related to $\mu_{PDCCH}$.

Alternatively, the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$.

When $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;

when $\mu_{PDCCH} > \mu_{PDSCH}$, a first symbol of the first scheduled PDSCH is not earlier than an end symbol of $N_{pdsch}$ PDCCH symbols after an end symbol of the PDCCH;
wherein the first PDSCH is the PDSCH with the earliest starting location among the T PDSCHs, and $N_{pdsch}$ is related to $\mu_{PDCCH}$.

Alternatively, the above chip includes at least one processor, at least one first memory, and at least one second memory, wherein the above at least one first memory and the above at least one processor are interconnected by wires, and instructions are stored in the above first memory, wherein the above at least one second memory and the above at least one processor are interconnected by wires, and data that needs to be stored in the method embodiments mentioned above is stored in the above second memory.

For apparatuses or products applied to or integrated into a chip, each module included may be implemented in hardware such as circuits, or at least some of the modules may be implemented by software programs executing on a processor integrated into the chip, and the remaining (if any) of the modules may be implemented in hardware such as circuits.

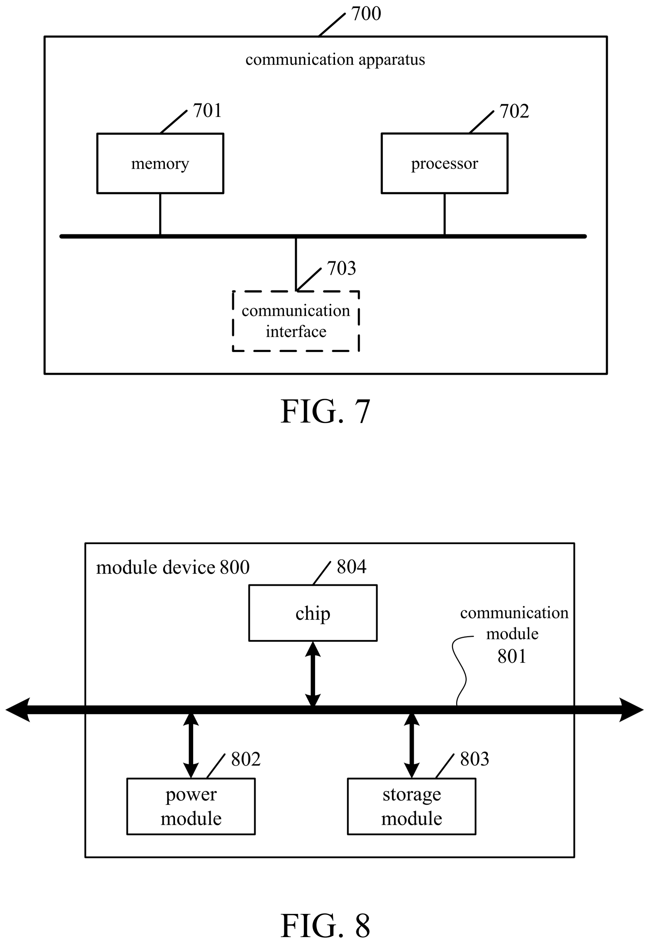

Referring to FIG. 7, FIG. 7 is a schematic structural diagram of another communication apparatus provided by an embodiment of the present application. The communication apparatus may be a terminal device or a network device. The communication apparatus 700 may include a memory 701 and a processor 702. Alternatively, it further includes a communication interface 703. The memory 701, the processor 702, and the communication interface 703 are connected via one or more communication buses. The communication interface 703 receives or transmits information under the control of the processor 702.

The memory 701 may include read-only memory and random access memory, and provides instructions and data to the processor 702. A part of the memory 701 may also include non-volatile random access memory.

The communication interface 703 is configured to receive or transmit data.

The processor 702 may be a Central Processing Unit (CPU), or the processor 702 may be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. The general-purpose processor may be a microprocessor, or alternatively, the processor 702 may be any conventional processor, etc. Wherein:

The memory 701 is configured to store program instructions.

The processor 702 is configured to invoke the program instructions stored in the memory 701.

The processor 702 invokes the program instructions stored in the memory 701 to cause the communication apparatus 700 to perform the methods performed by the terminal device or the network device in the method embodiments mentioned above.

Referring to FIG. 8, FIG. 8 is a schematic structural diagram of a module device provided by an embodiment of the present application. The module device 800 may perform the relevant steps of the terminal device or the network device in the method embodiments mentioned above. The module device 800 includes: a communication module 801, a power module 802, a storage module 803, and a chip 804.

The power module 802 is configured to provide power to the module device. The storage module 803 is configured to store data and instructions. The communication module 801 is configured for internal communication of the module device or for communication between the module device and external devices. The chip 804 is configured to perform the methods performed by the terminal device or the network device in the method embodiments mentioned above.

It should be noted that content not mentioned in the embodiments corresponding to FIGs. 7-8 and the detailed implementations of each step may be referred to the embodiment shown in FIG. 3 and the above contents, and will not be repeated herein.

Embodiments of the present application also provide a computer-readable storage medium having instructions stored therein, and when the instructions are executed on a processor, the method flow of the method embodiments mentioned above is implemented.

Embodiments of the present application also provide a computer program product having computer-readable instructions stored therein, which when executed on a computer, cause the computer to implement the method flow of the method embodiments mentioned above.

Regarding the various modules/units included in various apparatuses and products described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits. For apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits. For apparatuses or products applied to or integrated into a terminal, each module/unit included may be implemented in hardware such as circuits, different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

It should be noted that for the method embodiments mentioned above, they are described as a series of combination of actions for simplification. However, those skilled in the art should appreciate that the present application is not limited by the described sequence of actions, as some steps may be performed in other sequences or simultaneously according to the present application. Secondly, those skilled in the art should also appreciate that the embodiments described in the specification are all preferred embodiments, and not all the actions and modules involved are required by the present application.

The descriptions of the various embodiments provided in the present application may be cross-referenced, and the description of each embodiment focuses on a respective part. Any details omitted from certain embodiment are provided in the relevant descriptions of other embodiments. For the convenience and clarity of description, for example, the functions of the apparatuses and devices provided by the embodiments of the present application and the operations performed may be referenced to the related descriptions of the method embodiments of the present application. The various method and apparatus embodiments may also refer to, combine with, or quote each other.

Finally, it should be noted that: the above embodiments are only intended to illustrate the technical solutions of the present application, but not to pose limitations on them. Although detailed description of the present application has been illustrated with reference to the above embodiments, those of ordinary skill in the art should understand that they may still modify the technical solutions described in the above embodiments, or replace some or all of the technical features equivalently. Such modifications or replacements do not deviate the essence of the corresponding technical solutions from the scope of the technical solutions of the embodiments of the present application.

**Claims**

1. A communication method, **characterized in that** the method comprises:

   receiving downlink control information, DCI, from a network device, the DCI for simultaneous schedule of data transmission of N cells, N being an integer greater than 1; and
   sending data according to the DCI.

2. The method according to claim 1, **characterized in that** the DCI includes a frequency domain resource allocation, FDRA, field, and the FDRA field includes N FDRA subfields, wherein one FDRA subfield indicates a resource in frequency domain corresponding to a cell, wherein the one FDRA subfield includes (X + Y) bits, the X bits indicating allocated interlaced resources, and the Y bits being determined based on a number of resource block, RB, sets included in an activated uplink bandwidth part, BWP, wherein the N cells include a first cell, wherein

   the values of the X bits in the FDRA subfield corresponding to the first cell being all 1 indicates that the first cell is not scheduled; or
   the values of the X bits in the FDRA subfield corresponding to the first cell being all 0 indicates that the first cell is not scheduled.

3. The method according to claim 1, **characterized in that** the DCI includes a frequency domain resource allocation, FDRA, field, and the FDRA field includes N FDRA subfields, wherein one FDRA subfield indicates a resource in frequency domain corresponding to a cell, wherein the one FDRA subfield includes $(X + Y)$ bits, the X bits indicating allocated interlaced resources, and the Y bits being determined based on a number of resource block, RB, sets included in an activated uplink bandwidth part, BWP, wherein the N cells include a first cell, wherein

the values of the $(X + Y)$ bits in the FDRA subfield corresponding to the first cell being all 1 indicates that the first cell is not scheduled; or
the values of the $(X + Y)$ bits in the FDRA subfield corresponding to the first cell being all 0 indicates that the first cell is not scheduled.

4. The method according to any one of claims 1-3, **characterized in that** the DCI includes a modulation coding scheme, MCS, field, and the MCS field includes N MCS subfields, wherein one MCS subfield indicates a resource in time domain corresponding to a cell, wherein M cells out of the N cells are not scheduled, wherein the M cells include a first cell, and wherein M is a positive integer less than or equal to N, wherein
when M is an integer greater than 1, the first cell is a cell with the lowest cell index among the M cells, or the first cell is a cell with the highest cell index among the M cells, and wherein the MCS subfield corresponding to the first cell indicates a location of a resource in time domain for retransmitting hybrid automatic retransmission request acknowledgement, HARQ-ACK, information.

5. The method according to any one of claims 1-4, **characterized in that** the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$, wherein

when $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH;
when $\mu_{PDCCH} > \mu_{PDSCH}$, a first symbol of the first scheduled PDSCH is not earlier than an end symbol of $N_{pdsch}$ PDCCH symbols after an end symbol of the PDCCH;
wherein the first PDSCH is the PDSCH with the earliest starting location among the T PDSCHs, and $N_{pdsch}$ is related to $\mu_{PDCCH}$.

6. The method according to any one of claims 1-4, **characterized in that** the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$, wherein

when $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH;
when $\mu_{PDCCH} > \mu_{DSCH}$, a first symbol of the first scheduled PDSCH is not earlier than an end symbol of $N_{pdsch}$ PDCCH symbols after an end symbol of the PDCCH;
wherein the first PDSCH is the PDSCH with the earliest starting location among the T PDSCHs, and $N_{pdsch}$ is related to $\mu_{PDCCH}$.

7. A communication method, **characterized in that** the method comprises:

determining downlink control information, DCI, the DCI for simultaneous schedule of data transmission of N cells, N being an integer greater than 1; and
sending the DCI to a terminal device.

8. The method according to claim 7, **characterized in that** the DCI includes a frequency domain resource allocation, FDRA, field, and the FDRA field includes N FDRA subfields, wherein one FDRA subfield indicates a resource in frequency domain corresponding to a cell, wherein the one FDRA subfield includes $(X + Y)$ bits, the X bits indicating allocated interlaced resources, and the Y bits being determined based on a number of resource block, RB, sets included in an activated uplink bandwidth part, BWP, wherein the N cells include a first cell, wherein

the values of the X bits in the FDRA subfield corresponding to the first cell being all 1 indicates that the first cell is not scheduled; or
the values of the X bits in the FDRA subfield corresponding to the first cell being all 0 indicates that the first cell is not scheduled.

9. The method according to claim 7, **characterized in**

**that** the DCI includes a frequency domain resource allocation, FDRA, field, and the FDRA field includes N FDRA subfields, wherein one FDRA subfield indicates a resource in frequency domain corresponding to a cell, wherein the one FDRA subfield includes $(X + Y)$ bits, the X bits indicating allocated interlaced resources, and the Y bits being determined based on a number of resource block, RB, sets included in an activated uplink bandwidth part, BWP, wherein the N cells include a first cell, wherein

the values of the $(X + Y)$ bits in the FDRA subfield corresponding to the first cell being all 1 indicates that the first cell is not scheduled; or the values of the $(X + Y)$ bits in the FDRA subfield corresponding to the first cell being all 0 indicates that the first cell is not scheduled.

10. The method according to any one of claims 7-9, **characterized in that** the DCI includes a modulation coding scheme, MCS, field, and the MCS field includes N MCS subfields, wherein one MCS subfield indicates a resource in time domain corresponding to a cell, wherein M cells out of the N cells are not scheduled, wherein the M cells include a first cell, and wherein M is a positive integer less than or equal to N, wherein

when M is an integer greater than 1, the first cell is a cell with the lowest cell index among the M cells, or the first cell is a cell with the highest cell index among the M cells, and wherein the MCS subfield corresponding to the first cell indicates a location of a resource in time domain for retransmitting hybrid automatic retransmission request acknowledgement, HARQ-ACK, information.

11. The method according to any one of claims 7-10, **characterized in that** the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and subcarrier spacings corresponding to the T PDSCHs are all $\mu_{PDSCH}$, wherein

when $\mu_{PDCCH} < \mu_{PDSCH}$, a first symbol of the first scheduled PDSCH is not earlier than a first symbol in a slot next to the slot in which $N_{pdsch}$ PDCCH symbols are located after an end symbol of the PDCCH; when $\mu_{PDCCH} > \mu_{DSCH}$, a first symbol of the first scheduled PDSCH is not earlier than an end symbol of $N_{pdsch}$ PDCCH symbols after an end symbol of the PDCCH; wherein the first PDSCH is the PDSCH with the earliest starting location among the T PDSCHs, and $N_{pdsch}$ is related to $\mu_{PDCCH}$.

12. The method according to any one of claims 7-10, **characterized in that** the DCI is carried on a physical downlink control channel, PDCCH, wherein the DCI includes scheduling information of T downlink shared physical channels, PDSCHs, corresponding to W cells, wherein W is a positive integer less than or equal to N, and T is an integer greater than 0, wherein a subcarrier spacing corresponding to the PDCCH is $\mu_{PDCCH}$, and a maximum subcarrier spacing or a minimum subcarrier spacing out of the subcarrier spacings corresponding to the T PDSCHs is $\mu_{PDSCH}$, wherein

when $\mu_{PDCCH} < \mu_{DSCH}$, a first symbol of the first scheduled PDSCH is not earlier than a first symbol in a slot next to the slot in which $N_{pdsch}$ PDCCH symbols are located after an end symbol of the PDCCH; when $\mu_{PDCCH} > \mu_{PDSCH}$, a first symbol of the first scheduled PDSCH is not earlier than an end symbol of $N_{pdsch}$ PDCCH symbols after an end symbol of the PDCCH; wherein the first PDSCH is the PDSCH with the earliest starting location among the T PDSCHs, and $N_{pdsch}$ is related to $\mu_{PDCCH}$.

13. A communication apparatus, **characterized in that** the apparatus comprises:

a transceiver unit configured to receive downlink control information, DCI, from a network device, the DCI for simultaneous schedule of data transmission of N cells, N being an integer greater than 1; the transceiver unit is further configured to send data according to the DCI.

14. A communication apparatus, **characterized in that** the apparatus comprises:

a processing unit configured to determine downlink control information, DCI, the DCI for simultaneous schedule of data transmission of N cells, N being an integer greater than 1; and a transceiver unit configured to send the DCI to a terminal device.

15. A chip, **characterized in that** the chip comprises a processor and a communication interface, the processor configured to cause the chip to perform the method according to any one of claims 1-6, or the processor is configured to cause the chip to perform the method according to any one of claims 7-12.

16. A module device, **characterized in that** the module device comprises a communication module, a power module, a storage module, and a chip, wherein:

> the power module is configured to provide power for the module device;
> the storage module is configured to store data and instructions;
> the communication module is configured for internal communication of the module device, and/or for communication between the module device and external devices; and
> the chip is configured to perform the method according to any one of claims 1-6, or configured to perform the method according to any one of claims 7-12.

17. A communication apparatus, **characterized in that** the communication apparatus comprises:

> one or more processors, one or more memories, and one or more transceivers;
> wherein the one or more memories are configured to store computer programs, the one or more processors and the one or more transceivers are configured to execute the computer programs stored in the one or more memories to cause the communication apparatus to perform the method according to any one of claims 1-6 or to perform the method according to any one of claims 7-12.

18. A computer-readable storage medium, **characterized in that** the computer-readable storage medium has computer-readable instructions stored therein, wherein the computer-readable instructions, when being executed on a computer, cause the computer to perform the method according to any one of claims 1-6 or to perform the method according to any one of claims 7-12.

19. A computer program product, **characterized in that** the computer program product comprises computer program code, wherein the computer program code, when being executed, cause the method according to any one of claims 1-6 or the method according to any one of claims 7-12 to be implemented.

20. A communication system, **characterized in that** the communication system comprises a communication apparatus for performing the method of any one of claims 1-6, and a communication apparatus for performing the method of any one of claims 7-12.

network device

terminal device

FIG. 1

RB： Resource Block
Interlace： Interlace
BWP： Bandwidth Part

FIG. 2

FIG. 3

FIG. 4a

FIG. 4b

FIG. 5a

## FIG. 5b

30kHz SCS

cell1

120kHz SCS

PDCCH

t0

Slot0

PDSCH 2

Slot0  Slot1  Slot2  Slot3

$N_{pdsch}$

cell2
60kHz SCS

t1

PDSCH 1

Slot0  Slot1

# FIG. 5b

## FIG. 5c

Slot0  Slot1  Slot2  Slot3

120kHz SCS

cell1

PDCCH

t0  $N_{pdsch}$  t1

30kHz SCS

PDSCH 1

Slot0

cell2
60kHz SCS

PDSCH 2

Slot0  Slot1

# FIG. 5c

Slot0          Slot1          Slot2          Slot3

120kHz
SCS       PDCCH

t0

cell1
30kHz SCS                          PDSCH 2

Slot0

$N_{pdsch}$       t1

cell2
60kHz SCS                  PDSCH 1

Slot0                        Slot1

# FIG. 5d

communication apparatus 600

601

transceiver
unit

602

processing
unit

# FIG. 6

700

communication apparatus

701

memory

702

processor

703

communication
interface

FIG. 7

module device 800

804

chip

communication
module
801

802

power
module

803

storage
module

FIG. 8

## INTERNATIONAL SEARCH REPORT

| International application No. |
| --- |
| **PCT/CN2024/102336** |

**A. CLASSIFICATION OF SUBJECT MATTER**

H04W 72/232(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABS, ENTXT, ENTXTC, DWPI, VEN, 3GPP: 下行控制信息, 调度, 未, 没有, 多, 至少, 不少于, N个, 小区, 下行, FDRA, MCS, DCI, PDSCH, PDCCH

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022040964 A1 (HUAWEI TECHNOLOGIES CO., LTD.) 03 March 2022 (2022-03-03) description, paragraphs [0032]-[0040], [0073]-[0085], and [0113]-[0157], and claims 1-30 | 1, 7, 13-20 |
| X | CN 113473635 A (INTEL CORP.) 01 October 2021 (2021-10-01) description, paragraphs [0022]-[0101], and claims 1-25 | 1, 7, 13-20 |
| X | US 2021321400 A1 (QUALCOMM INC.) 14 October 2021 (2021-10-14) description, paragraphs [0068]-[0093], and claims 1-30 | 1, 7, 13-20 |
| A | CN 113517947 A (HUAWEI TECHNOLOGIES CO., LTD.) 19 October 2021 (2021-10-19) entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 September 2024** | **16 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/102336**

| Patent document cited in search report | | | Publication date (day/month/year) | Patent family member(s) | | | Publication date (day/month/year) |
|---|---|---|---|---|---|---|---|
| WO | 2022040964 | A1 | 03 March 2022 | EP | 4199402 | A1 | 21 June 2023 |
| | | | | US | 2023199766 | A1 | 22 June 2023 |
| | | | | CN | 115918011 | A | 04 April 2023 |
| CN | 113473635 | A | 01 October 2021 | | None | | |
| US | 2021321400 | A1 | 14 October 2021 | WO | 2021207416 | A1 | 14 October 2021 |
| | | | | EP | 4133867 | A1 | 15 February 2023 |
| | | | | CN | 115349293 | A | 15 November 2022 |
| CN | 113517947 | A | 19 October 2021 | WO | 2021204196 | A1 | 14 October 2021 |
| | | | | EP | 4113875 | A1 | 04 January 2023 |
| | | | | US | 2023031932 | A1 | 02 February 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023108046854